# EUROPEAN PATENT APPLICATION

(11) **EP 4 383 771 A1**
(43) Date of publication of application: **12.06.2024**
(21) Application number: 22852167.0
(22) Date of filing: 02.08.2022
(51) Int. Cl.: H04W 8/14, H04W 24/02

(54) **SECONDARY CELL GROUP CONTROL METHOD AND APPARATUS, AND TERMINAL**

(30) Priority: 03.08.2021 CN 202110888433
(71) Applicant: Vivo Mobile Communication Co., Ltd., Dongguan, Guangdong 523863 (CN)
(72) Inventor: PU, Wenjuan, Dongguan, Guangdong 523863 (CN)
(74) Representative: Lavoix
(86) International application number: PCT/CN2022/109661
(87) International publication number: WO 2023/011455

(57) **Abstract**

This application discloses a secondary cell group control method and apparatus and a terminal, and belongs to the field of communication technologies. The secondary cell group control method in embodiments of this application includes: receiving, by a terminal, a first command; controlling, by the terminal, a state of an SCG according to the first command; and performing, by the terminal, a first operation based on the state of the SCG, where the first operation includes at least one of the following: controlling a state of a serving cell of the SCG; reconfiguring or switching a radio bearer related to the SCG; controlling a state of a PDCP duplication function; and performing a measurement-related operation.

## Description

### CROSS-REFERENCE TO RELATED APPLICATIONS

This application claims priority to Chinese Patent Application No. 202110888433.5, filed on August 3, 2021 in China, which is incorporated herein by reference in its entirety.

### TECHNICAL FIELD

This application relates to the field of communication technologies, and in particular, to a secondary cell group control method and apparatus and a terminal.

### BACKGROUND

Dual connectivity (Dual Connectivity, DC) means that resources of two network nodes (access network elements) are provided for user equipment (User Equipment, UE) that may also be referred to as a terminal. One of the two network nodes is referred to as a master node (Master Node, MN), and the other network node is referred to as a secondary node (Secondary Node, SN). A carrier aggregation (Carrier Aggregation, CA) technology is used on each network node, that is, a series of serving cells, also referred to as a cell group (Cell Group), controlled by the node are configured for the UE. A cell group controlled by the master node is a master cell group (Master Cell Group, MCG), and a cell group controlled by the secondary node is a secondary cell group (Secondary Cell Group, SCG). Each cell group includes a special cell (Special Cell, SpCell) and a series of secondary cells (Secondary Cell, Scell). In the MCG, the special cell is referred to as a primary cell (Primary Cell, PCell), and in the SCG, the special cell is referred to as a primary secondary cell (Primary Secondary Cell, PSCell).

An SCG deactivated state is introduced in the 3rd Generation Partnership Project (3rd Generation Partnership Project, 3GPP) release Rel-17. When a terminal has no data requirement in the SCG or the terminal is overheated or has low power, a network may deactivate the SCG instead of directly deleting the SCG and then adding the SCG back when big data appears. Deactivating the SCG can enable the terminal to work in a more power-saving manner for a long time. When a condition changes, the network may activate the SCG again, so that the SCG can be restored quickly. However, in the prior art, there is no related solution for controlling behavior of the terminal after the SCG is deactivated and controlling behavior after the SCG is activated from a deactivated state, for example, controlling one or more of a state of a serving cell of the SCG, controlling a state of a Packet Data Convergence Protocol duplication (Packet Data Convergence Protocol duplication, PDCP duplication) function, or measurement-related behavior.

### SUMMARY

Embodiments of this application provide a secondary cell group control method and apparatus and a terminal, so that one or more of a state of a serving cell of an SCG of the terminal, a state of a PDCP duplication function, measurement-related behavior, and the like can be standardized in a case that the SCG is deactivated or reactivated after being deactivated.

According to a first aspect, a secondary cell group control method is provided, where the method includes:
receiving, by a terminal, a first command;
controlling, by the terminal, a state of a secondary cell group SCG according to the first command; and
performing, by the terminal, a first operation based on the state of the SCG, where the first operation includes at least one of the following:
   controlling a state of a serving cell of the SCG;
   reconfiguring or switching a radio bearer related to the SCG;
   controlling a state of a Packet Data Convergence Protocol PDCP duplication function; and
   performing a measurement-related operation.

According to a second aspect, a secondary cell group control apparatus is provided, where the apparatus includes:
a receiving module, configured to receive a first command;
a control module, configured to control a state of a secondary cell group SCG according to the first command; and
an execution module, configured to perform a first operation based on the state of the SCG, where the first operation includes at least one of the following:
   controlling a state of a serving cell of the SCG;
   reconfiguring or switching a radio bearer related to the SCG;
   controlling a state of a Packet Data Convergence Protocol PDCP duplication function; and
   performing a measurement-related operation.

According to a third aspect, a terminal is provided. The terminal includes a processor, a memory, and a program or an instruction that is stored in the memory and that can run on the processor, and when the program or instruction is executed by the processor, steps of the method according to the first aspect are implemented.

According to a fourth aspect, a terminal is provided, including a processor and a communication interface. The communication interface is configured to receive a first command, and the processor is configured to: control a state of a secondary cell group SCG according to the first command, and perform a first operation based on the state of the SCG, where the first operation includes at least one of the following: controlling a state of a serving cell of the SCG; reconfiguring or switching a radio bearer related to the SCG; controlling a state of a Packet Data Convergence Protocol PDCP duplication function; and performing a measurement-related operation.

According to a fifth aspect, a readable storage medium is provided. The readable storage medium stores a program or an instruction, and the program or the instruction is executed by a processor to implement steps of the method according to the first aspect.

According to a sixth aspect, a chip is provided. The chip includes a processor and a communication interface, the communication interface is coupled to the processor, and the processor is configured to run a program or an instruction to implement steps of the method according to the first aspect.

According to a seventh aspect, a computer program or program product is provided. The computer program or program product is stored in a non-volatile storage medium, and the program or program product is executed by at least one processor to implement steps of the method according to the first aspect.

In the embodiments of this application, a terminal controls a state of an SCG according to a received first command, and performs a first operation based on the state of the SCG, where the first operation includes at least one of the following: controlling a state of a serving cell of the SCG; reconfiguring or switching a radio bearer related to the SCG; controlling a state of a Packet Data Convergence Protocol PDCP duplication function; and performing a measurement-related operation, so that one or more of a state of a serving cell of an SCG of the terminal, a state of the PDCP duplication function, measurement-related behavior, and the like can be standardized in a case that the SCG is deactivated or reactivated after being deactivated, thereby improving communication performance of the terminal.

### BRIEF DESCRIPTION OF DRAWINGS

FIG. 1 is a block diagram of a wireless communication system to which embodiments of this application are applicable;
FIG. 2 is a flowchart of a secondary cell group control method according to an embodiment of this application;
FIG. 3 is a structural diagram of a secondary cell group control apparatus according to an embodiment of this application;
FIG. 4 is a structural diagram of a communication device according to an embodiment of this application; and
FIG. 5 is a structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. A New Radio (New Radio, NR) system is described in the following descriptions for example purposes, and the term NR is used in most of the following descriptions, but these technologies can also be applied to an application other than an NR system application, for example, a 6^{th} generation (6th Generation, 6G) communication system.

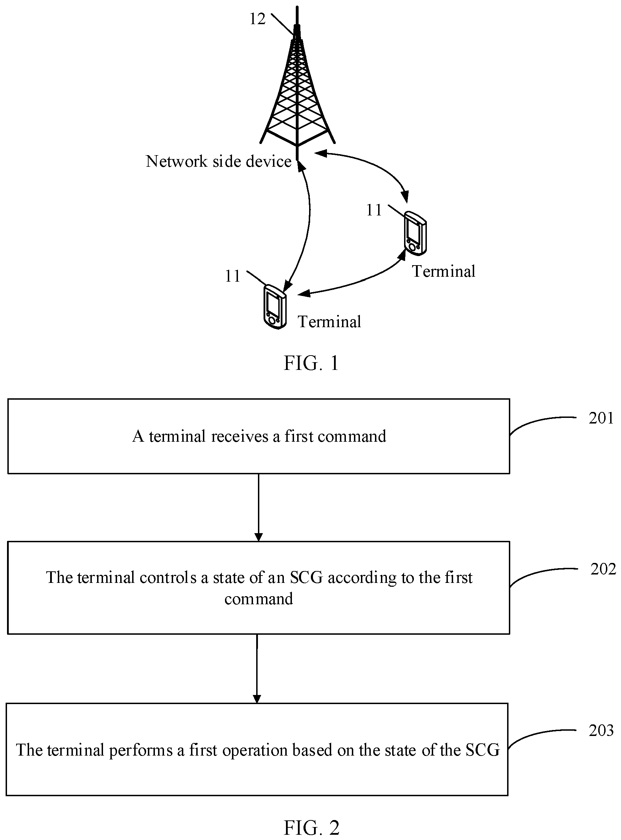

FIG. 1 is a block diagram of a wireless communication system to which embodiments of this application are applicable. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes an intelligent watch, a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that a same technical effect is achieved, the base station is not limited to a specified technical term. It should be noted that, in the embodiments of this application, only a base station in an NR system is used as an example, but a specific type of the base station is not limited.

A secondary cell group control method provided in the embodiments of this application will be described in detail below by using specific embodiments and application scenarios with reference to the accompanying drawings.

FIG. 2 is a flowchart of a secondary cell group control method according to an embodiment of this application. The method is performed by a terminal. As shown in FIG. 2, the method includes the following steps.

Step 201: The terminal receives a first command.

In this embodiment, the first command may be used to control a state of an SCG of the terminal, and the state of the SCG may include but is not limited to an activated state, a deactivated state, a dormant (dormant) state, or the like. Optionally, the first command may include an SCG activation command or an SCG deactivation command.

Step 202: The terminal controls the state of the SCG according to the first command.

In this step, if the first command is used to indicate to activate the SCG, the terminal may activate the SCG, that is, control the SCG to be in an activated state; and if the first command is used to indicate to deactivate the SCG, the terminal may deactivate the SCG, that is, control the SCG to be in a deactivated state.

Step 203: The terminal performs a first operation based on the state of the SCG, where the first operation includes at least one of the following:
controlling a state of a serving cell of the SCG;
reconfiguring or switching a radio bearer related to the SCG;
controlling a state of a Packet Data Convergence Protocol PDCP duplication function; and
performing a measurement-related operation.

In this embodiment, the serving cell of the SCG may include at least one of a PSCell and an SCell of the SCG. The state of the serving cell of the SCG may include but is not limited to an activated state, a deactivated state, a dormant state, and the like. The terminal controls the state of the serving cell of the SCG based on the state of the SCG. For example, if the SCG is in an activated state, the terminal may activate the serving cell of the SCG, that is, control the serving cell of the SCG to be in an activated state, to quickly start data transmission; and if the SCG is in a deactivated state, the terminal may deactivate the serving cell of the SCG, that is, control the serving cell of the SCG to be in a deactivated state, to save power.

The radio bearer (Radio Bearer) related to the SCG may include at least one of a signaling radio bearer (Signal Radio Bearer, SRB) and a data radio bearer (Data Radio Bearer, DRB). A bearer type of the radio bearer related to the SCG may include an SCG bearer (SCG Bearer), a split bearer (Split Bearer), and the like. The terminal reconfigures or switches, based on the state of the SCG, the radio bearer related to the SCG. For example, if the SCG is in an activated state, a bearer type of at least one radio bearer is configured as an SCG bearer, or a bearer type of at least one radio bearer is switched from a split bearer to an SCG bearer; and if the SCG is in a deactivated state, a bearer type of at least one radio bearer is configured as a split bearer, or a bearer type of at least one radio bearer is switched from an SCG bearer to a split bearer.

The state of the PDCP duplication function may include but is not limited to an activated state, a deactivated state, a dormant state, or the like. The terminal controls the state of the PDCP duplication function based on the state of the SCG. For example, if the SCG is in an activated state, the terminal may activate a PDCP duplication function of at least one radio bearer, that is, control the PDCP duplication function of the at least one radio bearer to be in an activated state; and if the SCG is in a deactivated state, the terminal may deactivate a PDCP duplication function of at least one radio bearer, that is, control the PDCP duplication function of the at least one radio bearer to be in a deactivated state. The radio bearer may include at least one of an SRB and a DRB.

The measurement-related operation may include but is not limited to one or more of measurement, measurement reporting, and relaxed measurement control. The foregoing measurement may include but is not limited to at least one of channel state information (Channel State Information, CSI) measurement, layer-1 (Layer 1, L1) measurement, radio link monitor (Radio Link Monitor, RLM) measurement, bidirectional forwarding detection (Bidirectional Forwarding Detection, BFD) measurement, and radio resource management (Radio Resource Management, RRM) measurement. The foregoing relaxed measurement may be understood as measurement in which at least one of a measurement condition (for example, a measurement threshold and a quantity of measurement frequencies) and a measurement cycle is relaxed or loosen compared with conventional measurement. The terminal performs the measurement-related operation based on the state of the SCG. For example, if the SCG is in an activated state, measurement and measurement reporting are started; and if the SCG is in a deactivated state, relaxed measurement is started.

According to the secondary cell group control method provided in this embodiment of this application, the terminal controls the state of the SCG according to the received first command, and performs the first operation based on the state of the SCG, where the first operation includes at least one of the following: controlling a state of a serving cell of the SCG; reconfiguring or switching a radio bearer related to the SCG; controlling a state of a Packet Data Convergence Protocol PDCP duplication function; and performing a measurement-related operation. In this way, one or more of a state of a serving cell of an SCG of the terminal, a state of a PDCP duplication function, measurement-related behavior, and the like can be standardized in a case that the SCG is deactivated or reactivated after being deactivated, thereby improving communication performance of the terminal.

Optionally, that the terminal controls the state of the serving cell of the SCG based on the state of the SCG includes at least one of the following:
in a case that the SCG is in an activated state, controlling, by the terminal, states of some or all serving cells of the SCG to be a first state, where he first state includes one of the following: a state predefined in a protocol, a state determined based on a Radio Resource Control (Radio Resource Control, RRC) configuration, and a state determined based on a first Media Access Control control element (Media Access Control Control Element, MAC CE); and
in a case that the SCG is in a deactivated state, controlling, by the terminal, states of some or all serving cells of the SCG to be the deactivated state.

In this embodiment, the state predefined in the protocol may include an activated state or a deactivated state. The RRC configuration is used to indicate the state of the serving cell of the SCG, for example, an SCellState configuration. Optionally, the RRC configuration may be sent together with an SCG activation command, or may be sent before an SCG activation command is sent, that is, sending time of the RRC configuration may be the same as sending time of the SCG activation command, or sending time of the RRC configuration may be earlier than sending time of the SCG activation command.

The first MAC CE is used to explicitly or implicitly indicate the state of the serving cell of the SCG, and the first MAC CE may reuse a MAC CE in an existing protocol, for example, an SCell activation or deactivation MAC CE (that is, SCell Activation/Deactivation MAC CE, SCell A/D MAC CE for short), or may be a newly defined MAC CE. This is not limited in this embodiment. Optionally, the first MAC CE may be sent by an MCG, that is, the terminal receives the first MAC CE from the MCG.

In an implementation, in a case that the SCG is in an activated state, states of some or all serving cells of the SCG may be predefined in a protocol as an activated state, for example, all SCells of the SCG may be activated by default, to start data transmission as soon as possible while saving signaling.

In another implementation, in a case that the SCG is in an activated state, states of some or all serving cells of the SCG may be predefined in a protocol as a deactivated state. For example, all SCells of the SCG may be deactivated by default, to reduce power consumption of the terminal while saving signaling.

In another implementation, in a case that the SCG is in an activated state, the state of the serving cell of the SCG may be determined based on an RRC configuration. For example, if the RRC configuration indicates to activate at least one serving cell of the SCG, the at least one serving cell of the SCG may be activated; and if the RRC configuration indicates to deactivate at least one serving cell of the SCG, the at least one serving cell of the SCG may be deactivated. In this implementation, in a case that the SCG is in an activated state, the state of the serving cell of the SCG is determined based on the RRC configuration, so that flexibility of controlling the state of the serving cell of the SCG can be improved.

In another implementation, in a case that the SCG is in an activated state, the state of the serving cell of the SCG may be determined based on the first MAC CE. For example, if the first MAC CE indicates to activate at least one serving cell of the SCG, the at least one serving cell of the SCG may be activated; and if the first MAC CE indicates to deactivate at least one serving cell of the SCG, the at least one serving cell of the SCG may be deactivated. In this implementation, in a case that the SCG is in an activated state, the state of the serving cell of the SCG is determined based on the first MAC CE, so that flexibility and timeliness of controlling the state of the serving cell of the SCG can be improved.

In another implementation, in a case that the SCG is in a deactivated state, states of some or all serving cells of the SCG may be controlled to be a deactivated state. For example, all SCells and PSCells of the SCG may be deactivated by default, to reduce power consumption of the terminal while saving signaling.

It should be noted that, that the SCG is in an activated state may also be referred to as that the SCG is activated, and that the SCG is in a deactivated state may also be referred to as that the SCG is deactivated.

Optionally, the first MAC CE is an SCell activation or deactivation MAC CE, and when a reserved bit of the SCell activation or deactivation MAC CE is a first value, the reserved bit is used to indicate that the SCell activation or deactivation MAC CE is applied to the SCG.

In this embodiment, the first MAC CE may be an existing SCell activation or deactivation MAC CE (that is, an SCell A/D MAC CE) in an existing protocol. The SCell A/D MAC CE includes a reserved bit, and a value of the reserved bit may include a first value and a second value. For example, one of the first value and the second value is 1, and the other is 0. When the reserved bit of the SCell A/D MAC CE is the first value, the SCell A/D MAC CE is applied to the SCG. When the reserved bit of the SCell A/D MAC CE is the second value, the SCell A/D MAC CE is applied to the MCG. For example, when the reserved bit of the SCell A/D MAC CE is 1, the SCell A/D MAC CE is applied to the SCG, and when the reserved bit of the SCell A/D MAC CE is 0, the SCell A/D MAC CE is applied to the MCG.

In an implementation, when the SCell A/D MAC CE is applied to the SCG, the SCG may be activated by default, and a PSCell of the SCG is activated by default. Optionally, some or all SCells of the SCG may be activated by default.

In an implementation, when the SCell A/D MAC CE is applied to the SCG, a first bit of the SCell activation or deactivation MAC CE may be used to indicate a state of an SCell of the SCG, and the first bit is a bit other than the reserved bit in the SCell activation or deactivation MAC CE, so that the state of the SCell of the SCG may be determined based on the first bit of the SCell activation or deactivation MAC CE.

Optionally, the first MAC CE includes a logical channel identity (Logical Channel Identity, LCID) field and an indication field, and the LCID field is used to indicate a type or a function of the first MAC CE.

When the LCID field indicates that the type or the function of the first MAC CE is to indicate a state of at least one serving cell of the SCG, the indication field is used to indicate a state of at least one serving cell of the SCG, and when the LCID field indicates that the type or the function of the first MAC CE is to indicate a state of a specific serving cell, the indication field is used to indicate a state of a specific serving cell, and the specific serving cell includes a primary secondary cell PSCell or an Scell.

In this embodiment, the first MAC CE may be a newly defined MAC CE. The first MAC CE may include an LCID field and an indication field. The LCID field is used to indicate a type or a function of the first MAC CE. The type or the function of the first MAC CE may include indicating a state of at least one serving cell of the SCG or indicating a state of a specific serving cell. The specific serving cell may be a specific serving cell related to the SCG, for example, a PSCell or an SCell. For example, if a value of the LCID field is a first LCID field value, the type or the function of the first MAC CE is to indicate a state of at least one serving cell of the SCG, and the first LCID field value may be related to at least one SCG; and if the value of the LCID field is a second LCID field value, the type or the function of the first MAC CE is to indicate a state of a specific serving cell.

Optionally, the LCID field may include an eLCID field (Extend LCID), where the eLCID field includes at least two values, for example, includes two OCTETs (octet), one OCTET indicates code point (Codepoint), and the other OCTET indicates an index (index), as shown in Table 1.

**Table 1 eLCID values of two OCTETs**

| Codepoint | Index | LCID value |
|---|---|---|
| 0 to (2¹⁶-1) | 320 to (2¹⁶+319) | Logical channel identity |

Optionally, when the LCID field indicates that the type or the function of the first MAC CE is to indicate a state of at least one serving cell of the SCG, the indication field may include at least one of the following:
an SCG identity field, used to indicate an SCG corresponding to the first MAC CE;
a first field, used to indicate to activate or deactivate the SCG;
a length field, used to indicate a length of the first MAC CE;
a serving cell identity field or a serving cell bitmap field, used to indicate a state of at least one serving cell of the SCG, where the state of the serving cell includes an activated state or a deactivated state; and
a bandwidth part (Bandwidth Part, BWP) identity field, used to indicate a state of a BWP of the at least one serving cell.

In this embodiment, the SCG identity (that is, SCG ID) field may be used to indicate an SCG corresponding to the first MAC CE. The SCG corresponding to the first MAC CE may be understood as an SCG to which the first MAC CE is applied or an SCG on which the first MAC CE functions. For example, if a value of the first LCID field is related to a plurality of SCGs, the SCG ID may be used to identify an SCG to which the first MAC CE is applied.

The first field may also be referred to as an activation or deactivation field (that is, an A/D field), and is used to indicate to activate or deactivate the SCG. For example, when a value of the first field is 1, the SCG is activated; and when the value of the first field is 0, the SCG is deactivated. The SCG may be an SCG to which the first MAC CE is applied.

The serving cell identity field (that is, a serving cell ID field) or the serving cell bitmap field is used to indicate a state of at least one serving cell of the SCG to which the first MAC CE is applied. For example, the serving cell ID field indicates a serving cell that is to be activated or deactivated by the first MAC CE. Different bits in the serving cell bitmap field may respectively correspond to different serving cells. When a bit in the serving cell bitmap field is 1, it indicates that a serving cell corresponding to the bit is activated. When a bit in the serving cell bitmap field or the serving cell bitmap field is 0, it indicates that a serving cell corresponding to the bit is deactivated. Optionally, the serving cell ID field may be used to indicate a state of a serving cell set of the SCG.

The BWP identity field (that is, a BWP ID field) is used to indicate a BWP that needs to be activated. For example, the BWP ID field indicates a BWP that needs to be activated by the terminal when the SCG is activated.

Optionally, the indication field includes the first field and the serving cell bitmap field. In a case that the first field indicates to deactivate the SCG, the terminal performs one of the following:
ignoring the serving cell bitmap field;
expecting a bit corresponding to the serving cell bitmap field to be 0; and
in a case that the bit corresponding to the serving cell bitmap field is not 0, ignoring the bit corresponding to the serving cell bitmap field.

In an implementation, in a case that the first field indicates to deactivate the SCG, the terminal may ignore the serving cell bitmap field, that is, the state of the serving cell is not controlled based on the serving cell bitmap field. In this case, optionally, the terminal may maintain the state of the serving cell of the SCG or may control the serving cell of the SCG to be in a deactivated state.

In another implementation, when the first field indicates to deactivate the SCG, the terminal expects the bit corresponding to the serving cell bitmap field to be 0, that is, the terminal does not expect a network side device to configure the bit corresponding to the serving cell bitmap field to be 1. In this way, the terminal may deactivate each corresponding serving cell based on a value of each bit of the serving cell bitmap field.

In another implementation, in a case that the first field indicates to deactivate the SCG, and in a case that the bit corresponding to the serving cell bitmap field is not 0, the terminal may ignore a bit whose value is not 0 in the serving cell bitmap field, that is, a state of a corresponding serving cell is not controlled based on the bit whose value is not 0 in the serving cell bitmap field. In this case, optionally, the terminal may maintain a state of a serving cell corresponding to the bit whose value is not 0 in the serving cell bitmap field, or may control a serving cell corresponding to the bit whose value is not 0 in the serving cell bitmap field to be in a deactivated state.

Optionally, when the LCID field indicates that the type or the function of the first MAC CE is to indicate a state of a specific serving cell, the indication field may include but is not limited to a serving cell ID field and/or a second field, where the serving cell ID field is used to indicate a specific serving cell to which the first MAC CE is applied, and the second field is used to indicate to activate or deactivate the specific serving cell to which the first MAC CE is applied. Optionally, in a case that there is no second field, the specific serving cell to which the first MAC CE is applied may be activated by default.

Optionally, the receiving, by a terminal, a first command includes:
receiving, by the terminal, the first MAC CE, where the type or the function of the first MAC CE is to indicate a state of a specific serving cell; and
the controlling, by the terminal, a state of a secondary cell group SCG according to the first command includes:
   activating or deactivating, by the terminal, an SCG to which the specific serving cell belongs.

In this embodiment, in a case that the terminal receives the first MAC CE indicating the state of the specific serving cell, the terminal may activate or deactivate an SCG to which the specific serving cell belongs. For example, if the first MAC CE is used to indicate to activate a specific serving cell, the terminal may activate an SCG to which the specific serving cell belongs, and activate the specific serving cell; and if the first MAC CE is used to indicate to deactivate a specific serving cell, the terminal may deactivate an SCG to which the specific serving cell belongs, and deactivate the specific serving cell. The specific serving cell may include a PSCell or an SCell.

In this embodiment of this application, the terminal may control, based on the first MAC CE indicating a state of a specific serving cell, a state of an SCG to which the specific serving cell belongs and a state of the specific serving cell, thereby saving signaling while improving flexibility of controlling the state of the SCG and the state of the specific serving cell.

Optionally, the method may further include: receiving, by the terminal, a second MAC CE, where a type or a function of the second MAC CE is to indicate a state of a first specific serving cell related to an MCG, and the first specific serving cell includes a PCell or an SCell; and activating or deactivating, by the terminal, an MCG to which which the first specific serving cell belongs. For example, if the second MAC CE is used to indicate to activate the first specific serving cell, the terminal may activate the MCG to which the first specific serving cell belongs, and activate the first specific serving cell; and if the second MAC CE is used to indicate to deactivate the first specific serving cell, the terminal may deactivate the MCG to which the first specific serving cell belongs, and deactivate the first specific serving cell.

Optionally, in a case that the SCG is in a deactivated state, the first configuration received by the terminal does not trigger activation of an SCell of the SCG, and the first configuration is used to indicate to activate the SCell of the SCG or is used when the SCell of the SCG is in an activated state.

In this embodiment, in a case that the SCG is in a deactivated state, if the terminal receives the first configuration that is used to indicate to activate the SCell of the SCG or is used when the SCell of the SCG is in an activated state, the terminal may not trigger activation of the SCell of the SCG, and may keep the SCell of the SCG in a deactivated state. Optionally, in a case that the SCG is activated, the SCell of the SCG may be activated based on the first configuration.

In this embodiment, in a case that the SCG is in a deactivated state, if the terminal receives the first configuration, the terminal forbids the first configuration from triggering activation of the SCell of the SCG, thereby reducing power consumption of the terminal.

Optionally, in a case that the terminal does not receive a second configuration from the network side device, the first state is a state predefined in a protocol, and the second configuration is used to indicate a state of a serving cell of the SCG.

In this embodiment, in a case that the terminal does not receive, from the network side device in a process of activating the SCG, the second configuration that is used to indicate the state of the serving cell of the SCG, states of some or all serving cells of the SCG may be predefined in a protocol as an activated state, or states of some or all serving cells of the SCG may be predefined in a protocol as a deactivated state.

It should be noted that, in a process of activating the SCG, in a case that the terminal receives, from the network side device, the second configuration used to indicate the state of the serving cell of the SCG, the terminal may control the state of the serving cell of the SCG based on the second configuration.

Optionally, in a case that an activation procedure of the SCG is initiated by the network device and the terminal does not receive, from the network side device, the second configuration used to indicate the state of the serving cell of the SCG, the first state is a state predefined in a protocol.

Optionally, in a case that an activation procedure of the SCG is initiated by the terminal, the terminal controls states of some or all serving cells of the SCG to be the first state.

Optionally, before or after the receiving, by a terminal, a first command, the method further includes:
sending, by the terminal, an SCG activation request to a network side device; where
the SCG activation request carries one of the following: an identity of a serving cell expected to be activated, a quantity of serving cells expected to be activated, an identity set of serving cells expected to be activated, and a type of a serving cell expected to be activated.

In this embodiment, the SCG activation request is used to request to activate the SCG. The serving cell identity set may include a plurality of serving cell identities. The type of the serving cell may include at least one of the following: a PSCell, an Scell, a serving cell configured with a physical uplink control channel (Physical Uplink Control Channel, PUCCH), or a serving cell with a specific frequency point or in a specific frequency range.

In this embodiment of this application, the terminal sends, to the network side device, the SCG activation request that carries at least one of an identity of a serving cell expected to be activated, a quantity of serving cells expected to be activated, an identity set of serving cells expected to be activated, and a type of a serving cell expected to be activated, so that a related configuration that is provided by the network side device for the terminal for activating a serving cell may be more compatible with a requirement of the terminal.

Optionally, the reconfiguring or switching, by the terminal based on the state of the SCG, a radio bearer related to the SCG includes at least one of the following:
switching, by the terminal, a bearer type of at least one radio bearer from a split bearer to an SCG bearer in a case that the SCG is in an activated state; and
switching, by the terminal, a bearer type of at least one radio bearer from an SCG bearer to a split bearer in a case that the SCG is in a deactivated state.

Optionally, in a case that the terminal switches the bearer type of the at least one radio bearer from the SCG bearer to the split bearer, the method further includes: configuring a primary path of the split bearer as an MCG.

For example, both a DRB 1 and a DRB 2 are SCG bearers (SCG bearer). The DRB 1 is configured with an MCG MAC configuration, and the DRB 2 is not configured with an MCG MAC configuration. After the SCG is deactivated, UE configures a bearer type of the DRB 1 from the SCG bearer to a split bearer (split bearer), and suspends the DRB 2 temporarily. Optionally, after the SCG is activated, the UE switches the bearer type of the DRB 1 from the split bearer to the SCG bearer, and cancels the suspension of the DRB 2. After the SCG is deactivated, the bearer type of the DRB 1 is switched from the SCG bearer to the split bearer, and a main path of the split DRB 1 is configured as an MCG. In this way, in a period in which the SCG is deactivated, the UE may send uplink data first by using the MCG. When a data volume reaches a predefined threshold, and data needs to be sent by using the SCG, the SCG is requested to be activated, thereby avoiding a case that the SCG is activated immediately after being deactivated. After the SCG is activated, the SCG may be restored to the previous SCG bearer, or a network reconfigures the bearer type of the SCG.

Optionally, in a case that the SCG is in a deactivated state, if there is a preconfigured MCG MAC or MCG Radio Link Control (Radio Link Control, RLC) configuration, the terminal switches a bearer type of at least one radio bearer from an SCG bearer to a split bearer.

Optionally, the controlling, by the terminal, a state of a PDCP duplication function based on the state of the SCG includes at least one of the following:
activating, by the terminal, a PDCP duplication function of at least one radio bearer in a case that the SCG is in an activated state; and
deactivating, by the terminal, a PDCP duplication function of at least one radio bearer in a case that the SCG is in a deactivated state.

In this embodiment, in a case that the SCG is in an activated state, the terminal activates a PDCP duplication function of at least one radio bearer, so that data transmission reliability can be improved; and in a case that the SCG is in a deactivated state, the terminal deactivates a PDCP duplication function of at least one radio bearer, so that network signaling overheads can be reduced while avoiding frequent triggering of an unnecessary SCG activation process.

Optionally, the activating, by the terminal, a PDCP duplication function of at least one radio bearer in a case that the SCG is in an activated state includes at least one of the following:
in a case that the SCG is in an activated state, if the split radio bearer is configured with the PDCP duplication function, activating, by the terminal, a PDCP duplication function of at least one split radio bearer; and
in a case that the SCG is in an activated state, if the split radio bearer is configured with the PDCP duplication function, activating, by the terminal, a PDCP duplication function of an SCG RLC entity corresponding to at least one split radio bearer.

In this embodiment, the split radio bearer may include at least one of a split signaling radio bearer (Split SRB) and a split data radio bearer (Split DRB). For example, in a case that the SCG is in an activated state, if the split signaling radio bearer is configured with the PDCP duplication function, the terminal activates the PDCP duplication function of the at least one split signaling radio bearer, and/or activates the PDCP duplication function of the SCG RLC entity corresponding to the at least one split signaling radio bearer; and if the split data radio bearer is configured with the PDCP duplication function, the terminal activates the PDCP duplication function of the at least one split data radio bearer, and/or activates the PDCP duplication function of the SCG RLC entity corresponding to the at least one split data radio bearer.

In this embodiment, in a case that the SCG is in an activated state, if the split radio bearer is configured with the PDCP duplication function, the terminal activates the PDCP duplication function of the at least one split radio bearer, and/or activates the PDCP duplication function of the SCG RLC entity corresponding to the at least one split radio bearer. In this way, data transmission reliability can be improved.

Optionally, the deactivating, by the terminal, a PDCP duplication function of at least one radio bearer in a case that the SCG is in a deactivated state includes at least one of the following:
in a case that the SCG is in a deactivated state, if the split radio bearer is configured with the PDCP duplication function, deactivating, by the terminal, a PDCP duplication function of at least one split radio bearer; and
in a case that the SCG is in a deactivated state, if the split radio bearer is configured with the PDCP duplication function, deactivating, by the terminal, a PDCP duplication function of an SCG RLC entity corresponding to at least one split radio bearer.

In this embodiment, the split radio bearer may include at least one of a split signaling radio bearer (Split SRB) and a split data radio bearer (Split DRB). For example, in a case that the SCG is in a deactivated state, if the split signaling radio bearer is configured with the PDCP duplication function, the terminal deactivates the PDCP duplication function of the at least one split signaling radio bearer, and/or deactivates the PDCP duplication function of the SCG RLC entity corresponding to the at least one split signaling radio bearer; and if the split data radio bearer is configured with the PDCP duplication function, the terminal deactivates the PDCP duplication function of the at least one split data radio bearer, and/or deactivates the PDCP duplication function of the SCG RLC entity corresponding to the at least one split data radio bearer.

In actual application, if the split radio bearer is configured with the PDCP duplication function and the PDCP duplication function is in an activated state, in a period in which the SCG is in a deactivated state, a PDCP layer copies a plurality of PDCP data PDUs and transmits the PDCP data PDUs to a corresponding RLC entity including an SCG RLC entity, so that the SCG triggers a request to activate the SCG. The SCG may be deactivated for power saving or overheating reasons. In this case, activation of the SCG should not be triggered because of the PDCP duplication function. In the prior art, when the SCG is deactivated, a network side device sends a PDCP duplication function deactivation command to resolve the foregoing problem. However, signaling overheads of the network side device are increased in this manner. In this embodiment, in a case that the SCG is in a deactivated state, if the split radio bearer is configured with the PDCP duplication function, the terminal deactivates the PDCP duplication function of the at least one split radio bearer and/or deactivates the PDCP duplication function of the SCG RLC entity corresponding to the at least one split radio bearer, so that network signaling overheads can be reduced while frequent triggering of an unnecessary SCG activation process is avoided.

Optionally, the performing, by the terminal, a measurement-related operation based on the state of the SCG includes at least one of the following:
performing, by the terminal, at least one of measurement and measurement reporting in a case that the SCG is in a deactivated state and an SCG activation request sent by the terminal is rejected; and
canceling, by the terminal, relaxed measurement in a case that the SCG is in a deactivated state and an SCG activation request sent by the terminal is rejected.

In this embodiment, the measurement may include but is not limited to at least one of CSI measurement, L1 measurement, RLM measurement, BFD measurement, and RRM measurement. The relaxed measurement may be understood as measurement in which at least one of a measurement condition (for example, a measurement threshold and a quantity of measurement frequencies) and a measurement cycle is relaxed or loosen compared with conventional measurement.

In actual application, in a case that the SCG is in a deactivated state, when data on the SCG needs to be sent, the UE may initiate an SCG activation process, for example, send an activation request to the network side device. If the UE receives an SCG deactivation command, that is, the network side device rejects the SCG activation request sent by the terminal, for example, the network side device rejects the SCG activation request due to a resource shortage or the like, the terminal may perform at least one of measurement, measurement reporting, or cancelation of relaxed measurement. In this way, the SCG activation process can be accelerated while power consumption is not increased excessively.

Optionally, in a case that the SCG is in a deactivated state and the SCG activation request sent by the terminal is rejected, the terminal may determine, based on a protocol agreement or a network side configuration, whether to perform at least one of measurement, measurement reporting, or cancelation of relaxed measurement.

Optionally, the performing, by the terminal, at least one of measurement and measurement reporting in a case that the SCG is in a deactivated state and an SCG activation request sent by the terminal is rejected includes:
in a case that the SCG is in a deactivated state and the SCG activation request sent by the terminal is rejected, performing, by the terminal, at least one of measurement and measurement reporting only within preset time.

In this embodiment, the preset time may be properly set according to an actual situation. For example, the preset time may be within 20 milliseconds from a moment at which the terminal receives the SCG deactivation command. In a case that the SCG is in a deactivated state and the SCG activation request sent by the terminal is rejected, the terminal may perform at least one of measurement and measurement reporting only within the preset time, and does not perform measurement or measurement reporting after timeout.

Optionally, before or after the receiving, by a terminal, a first command, the method further includes:
sending, by the terminal, an SCG activation request or deactivation request to a network side device, where the terminal determines, based on a PDCP termination (PDCP termination) of a radio bearer related to the SCG, to send the SCG activation request or deactivation request to an MN or an SN.

For example, if a DRB is an SCG bearer or a split bearer, and a PDCP corresponding to the DRB is in the MN, when uplink data arrives at the DRB, the UE sends an SCG activation request to the MN, and if the PDCP corresponding to the DRB is in the SN, when uplink data arrives at the DRB, the UE sends an SCG activation request to the SN.

It should be noted that, the secondary cell group control method provided in this embodiment of this application may be performed by a secondary cell group control apparatus, or by a control module that is in the secondary cell group control apparatus and that is configured to perform the secondary cell group control method. In this embodiment of this application, that the secondary cell group control apparatus performs the secondary cell group control apparatus is used as an example to describe the secondary cell group control apparatus provided in the embodiments of this application.

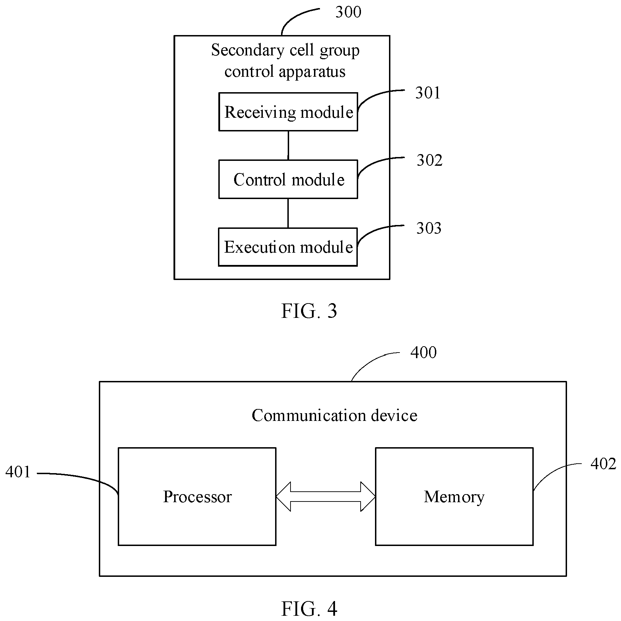

FIG. 3 is a structural diagram of a secondary cell group control apparatus according to an embodiment of this application. As shown in FIG. 3, a secondary cell group control apparatus 300 includes:
a receiving module 301, configured to receive a first command;
a control module 302, configured to control a state of a secondary cell group SCG according to the first command; and
an execution module 303, configured to perform a first operation based on the state of the SCG, where the first operation includes at least one of the following:
   controlling a state of a serving cell of the SCG;
   reconfiguring or switching a radio bearer related to the SCG;
   controlling a state of a Packet Data Convergence Protocol PDCP duplication function; and
   performing a measurement-related operation.

Optionally, the execution module is specifically configured to perform at least one of the following:
in a case that the SCG is in an activated state, controlling states of some or all serving cells of the SCG to be a first state, where the first state includes one of the following: a state predefined in a protocol, a state determined based on a Radio Resource Control RRC configuration, and a state determined based on a first Media Access Control control element MAC CE; and
in a case that the SCG is in a deactivated state, controlling states of some or all serving cells of the SCG to be the deactivated state.

Optionally, the first MAC CE is an SCell activation or deactivation MAC CE, and a reserved bit of the SCell activation or deactivation MAC CE is a first value, the reserved bit is used to indicate that the SCell activation or deactivation MAC CE is applied to the SCG.

Optionally, the first MAC CE includes a logical channel identity LCID field and an indication field, and the LCID field is used to indicate a type or a function of the first MAC CE; and
when the LCID field indicates that the type or the function of the first MAC CE is to indicate a state of at least one serving cell of the SCG, the indication field is used to indicate a state of at least one serving cell of the SCG, and when the LCID field indicates that the first MAC CE is a second MAC CE, the indication field is used to indicate a state of a specific serving cell, and the specific serving cell includes a primary secondary cell PSCell or an Scell.

Optionally, when the LCID field indicates that the type or the function of the first MAC CE is to indicate a state of at least one serving cell of the SCG, the indication field includes at least one of the following:
an SCG identity field, used to indicate an SCG corresponding to the first MAC CE;
a first field, used to indicate to activate or deactivate the SCG;
a length field, used to indicate a length of the first MAC CE;
a serving cell identity field or a serving cell bitmap field, used to indicate a state of at least one serving cell of the SCG, where the state of the serving cell includes an activated state or a deactivated state; and
a bandwidth part BWP identity field, used to indicate a BWP that needs to be activated.

Optionally, the indication field includes the first field and the serving cell bitmap field, and in a case that the first field indicates to deactivate the SCG, the apparatus performs one of the following:
ignoring the serving cell bitmap field;
expecting a bit corresponding to the serving cell bitmap field to be 0; and
in a case that the bit corresponding to the serving cell bitmap field is not 0, ignoring the bit corresponding to the serving cell bitmap field.

Optionally, the receiving module is specifically configured to:
receive the first MAC CE, where the type or the function of the first MAC CE is to indicate a state of a specific serving cell; and
the control module is specifically configured to:
   activate or deactivate an SCG to which the specific serving cell belongs.

Optionally, in a case that the SCG is in a deactivated state, a first configuration received by the apparatus does not trigger SCell activation of the SCG, and the first configuration is used to indicate to activate the SCell of the SCG or is used when the SCell of the SCG is in an activated state.

Optionally, in a case that a second configuration is not received from a network side device, the first state is the state predefined in the protocol, and the second configuration is used to indicate a state of a serving cell of the SCG.

Optionally, the apparatus further includes:
a sending module, configured to: before the first command is received, send an SCG activation request to a network side device; where
the SCG activation request carries one of the following: an identity of a serving cell expected to be activated, a quantity of serving cells expected to be activated, an identity set of serving cells expected to be activated, and a type of a serving cell expected to be activated.

Optionally, the execution module is specifically configured to perform at least one of the following:
switching a bearer type of at least one radio bearer from a split bearer to an SCG bearer in a case that the SCG is in an activated state; and
switching a bearer type of at least one radio bearer from an SCG bearer to a split bearer in a case that the SCG is in a deactivated state.

Optionally, the execution module is specifically configured to perform at least one of the following:
activating a PDCP duplication function of at least one radio bearer in a case that the SCG is in an activated state; and
deactivating a PDCP duplication function of at least one radio bearer in a case that the SCG is in a deactivated state.

Optionally, the execution module is specifically configured to perform at least one of the following:
in a case that the SCG is in an activated state, if the split radio bearer is configured with the PDCP duplication function, activating a PDCP duplication function of at least one split radio bearer; and
in a case that the SCG is in an activated state, if the split radio bearer is configured with the PDCP duplication function, activating a PDCP duplication function of an SCG RLC entity corresponding to at least one split radio bearer.

Optionally, the execution module is specifically configured to perform at least one of the following:
in a case that the SCG is in a deactivated state, if the split radio bearer is configured with the PDCP duplication function, deactivating a PDCP duplication function of at least one split radio bearer; and
in a case that the SCG is in a deactivated state, if the split radio bearer is configured with the PDCP duplication function, deactivating a PDCP duplication function of an SCG RLC entity corresponding to at least one split radio bearer.

Optionally, the execution module is specifically configured to perform at least one of the following:
performing at least one of measurement and measurement reporting in a case that the SCG is in a deactivated state and a sent SCG activation request is rejected; and
canceling relaxed measurement in a case that the SCG is in a deactivated state and a sent SCG activation request is rejected.

Optionally, the execution module is specifically configured to:
in a case that the SCG is in a deactivated state and the sent SCG activation request is rejected, perform at least one of measurement and measurement reporting only within preset time.

The secondary cell group control apparatus in this embodiment of this application may be an apparatus or an electronic device with an operating system, or may be a component, an integrated circuit, or a chip in a terminal. The apparatus or electronic device may be a mobile terminal, or a non-mobile terminal. For example, the mobile terminal may include but is not limited to the foregoing listed types of the terminal 11, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

The secondary cell group control apparatus provided in this embodiment of this application can implement each process implemented in the method embodiment of FIG. 2, and a same technical effect is achieved. To avoid repetition, details are not described herein again.

Optionally, as shown in FIG. 4, an embodiment of this application further provides a communication device 400, including a processor 401, a memory 402, and a program or an instruction that is stored in the memory 402 and that run on the processor 401. For example, when the communication device 400 is a terminal, when the program or the instruction is executed by the processor 401, each process of the method of the secondary cell group control method is performed, and a same technical effect can be achieved. To avoid repetition, details are not described herein.

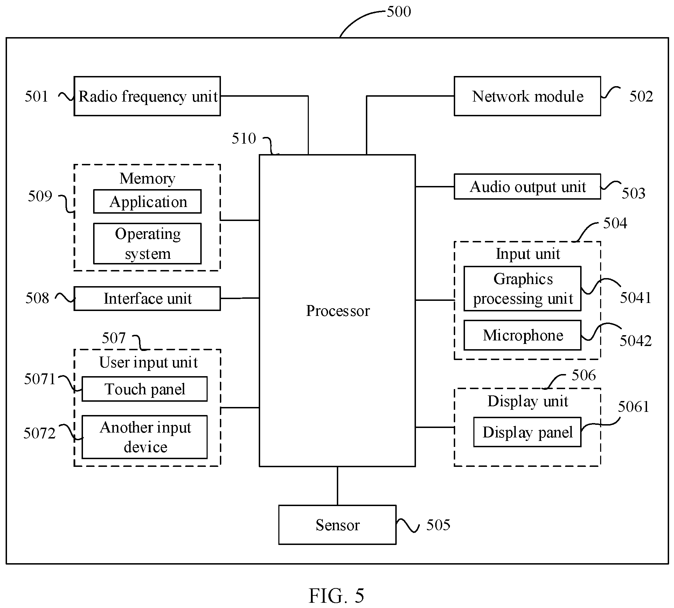

An embodiment of this application further provides a terminal, including a processor and a communication interface. The communication interface is configured to receive a first command. The processor is configured to: control a state of the SCG according to the first command; and perform a first operation based on the state of the SCG, where the first operation includes at least one of the following: controlling a state of a serving cell of the SCG; reconfiguring or switching a radio bearer related to the SCG; controlling a state of a PDCP duplication function; and performing a measurement-related operation. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 5 is a schematic diagram of a hardware structure of a terminal according to an embodiment of this application.

A terminal 500 includes but is not limited to some components in a radio frequency unit 501, a network module 502, an audio output unit 503, an input unit 504, a sensor 505, a display unit 506, a user input unit 507, an interface unit 508, a memory 509, and a processor 510.

A person skilled in the art can understand that the terminal 500 may further include a power supply (such as a battery) that supplies power to each component. The power supply may be logically connected to the processor 510 by using a power supply management system, to implement functions such as charging and discharging management, and power consumption management by using the power supply management system. The terminal structure shown in FIG. 5 constitutes no limitation on the terminal, and the terminal may include more or fewer components than those shown in the figure, or combine some components, or have different component arrangements. Details are not described herein.

It should be understood that, in this embodiment of this application, the input unit 504 may include a graphics processing unit (Graphics Processing Unit, GPU) 5041 and a microphone 5042, and the graphics processing unit 5041 processes image data of a still picture or a video obtained by an image capture apparatus (such as a camera) in a video capture mode or an image capture mode. The display unit 506 may include a display panel 5061. Optionally, the display panel 5061 may be configured in a form such as a liquid crystal display or an organic light-emitting diode. The user input unit 507 includes a touch panel 5071 and another input device 5072. The touch panel 5071 is also referred to as a touchscreen. The touch panel 5071 may include two parts: a touch detection apparatus and a touch controller. The another input device 5072 may include but is not limited to a physical keyboard, a functional button (such as a volume control button or a power on/off button), a trackball, a mouse, and a joystick. Details are not described herein.

In this embodiment of this application, the radio frequency unit 501 receives downlink data from a network side device and then sends the downlink data to the processor 510 for processing; and sends uplink data to the network side device. Usually, the radio frequency unit 51 includes but is not limited to an antenna, at least one amplifier, a transceiver, a coupler, a low noise amplifier, a duplexer, and the like.

The memory 509 may be configured to store a software program or an instruction and various data. The memory 509 may mainly include a program or instruction storage area and a data storage area. The program or instruction storage area may store an operating system, and an application or an instruction required by at least one function (for example, a sound playing function or an image playing function). In addition, the memory 509 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 510 may include one or more processing units. Optionally, an application processor and a modem processor may be integrated into the processor 510. The application processor mainly processes an operating system, a user interface, an application, an instruction, or the like. The modem processor mainly processes wireless communication, for example, a baseband processor. It can be understood that, alternatively, the modem processor may not be integrated into the processor 510.

The radio frequency unit 501 is configured to receive a first command.

The processor 510 is configured to: control a state of the SCG according to the first command; and perform a first operation based on the state of the SCG, where the first operation includes at least one of the following: controlling a state of a serving cell of the SCG; reconfiguring or switching a radio bearer related to the SCG; controlling a state of a PDCP duplication function; and performing a measurement-related operation.

In this embodiment of this application, one or more of a state of a serving cell of an SCG of the terminal, a state of a PDCP duplication function, measurement-related behavior, and the like can be standardized in a case that the SCG is an activated state or a deactivated state, so that communication performance of the terminal can be improved.

Optionally, the processor 510 is specifically configured to perform at least one of the following:
in a case that the SCG is in an activated state, controlling, by the terminal, states of some or all serving cells of the SCG to be a first state, where the first state includes one of the following: a state predefined in a protocol, a state determined based on a Radio Resource Control RRC configuration, and a state determined based on a first Media Access Control control element MAC CE; and
in a case that the SCG is in a deactivated state, controlling, by the terminal, states of some or all serving cells of the SCG to be the deactivated state.

Optionally, the first MAC CE is an SCell activation or deactivation MAC CE, and when a reserved bit of the SCell activation or deactivation MAC CE is a first value, the reserved bit is used to indicate that the SCell activation or deactivation MAC CE is applied to the SCG.

Optionally, the first MAC CE includes a logical channel identity LCID field and an indication field, and the LCID field is used to indicate a type or a function of the first MAC CE; and
when the LCID field indicates that the type or the function of the first MAC CE is to indicate a state of at least one serving cell of the SCG, the indication field is used to indicate a state of at least one serving cell of the SCG, and when the LCID field indicates that the type or the function of the first MAC CE is to indicate a state of a specific serving cell, the indication field is used to indicate a state of a specific serving cell, and the specific serving cell includes a primary secondary cell PSCell or an Scell.

Optionally, when the LCID field indicates that the type or the function of the first MAC CE is to indicate a state of at least one serving cell of the SCG, the indication field includes at least one of the following:
an SCG identity field, used to indicate an SCG corresponding to the first MAC CE;
a first field, used to indicate to activate or deactivate the SCG;
a length field, used to indicate a length of the first MAC CE;
a serving cell identity field or a serving cell bitmap field, used to indicate a state of at least one serving cell of the SCG, where the state of the serving cell includes an activated state or a deactivated state; and
a bandwidth part BWP identity field, used to indicate a BWP that needs to be activated.

Optionally, the indication field includes the first field and the serving cell bitmap field, and in a case that the first field indicates to deactivate the SCG, the processor 510 is specifically configured to perform one of the following:
ignoring the serving cell bitmap field;
expecting a bit corresponding to the serving cell bitmap field to be 0; and
in a case that the bit corresponding to the serving cell bitmap field is not 0, ignoring the bit corresponding to the serving cell bitmap field.

Optionally, the radio frequency unit 501 is specifically configured to:
receive, by the terminal, the first MAC CE, where the type or the function of the first MAC CE is to indicate a state of a specific serving cell; and
the processor 510 is specifically configured to:
   activate or deactivate an SCG to which the specific serving cell belongs.

Optionally, in a case that the SCG is in a deactivated state, a first configuration received by the radio frequency unit 501 does not trigger SCell activation of the SCG, and the first configuration is used to indicate to activate the SCell of the SCG or is used when the SCell of the SCG is in an activated state.

Optionally, in a case that the radio frequency unit 501 does not receive a second configuration from a network side device, the first state is the state predefined in the protocol, and the second configuration is used to indicate a state of a serving cell of the SCG.

Optionally, the radio frequency unit 501 is further configured to:
before the first command is received, send an SCG activation request to a network side device; where
the SCG activation request carries one of the following: an identity of a serving cell expected to be activated, a quantity of serving cells expected to be activated, an identity set of serving cells expected to be activated, and a type of a serving cell expected to be activated.

Optionally, the processor 510 is specifically configured to perform at least one of the following:
switching, by the terminal, a bearer type of at least one radio bearer from a split bearer to an SCG bearer in a case that the SCG is in an activated state; and
switching, by the terminal, a bearer type of at least one radio bearer from an SCG bearer to a split bearer in a case that the SCG is in a deactivated state.

Optionally, the processor 510 is specifically configured to perform at least one of the following:
activating, by the terminal, a PDCP duplication function of at least one radio bearer in a case that the SCG is in an activated state; and
deactivating, by the terminal, a PDCP duplication function of at least one radio bearer in a case that the SCG is in a deactivated state.

Optionally, the processor 510 is specifically configured to perform at least one of the following:
in a case that the SCG is in an activated state, if the split radio bearer is configured with the PDCP duplication function, activating, by the terminal, a PDCP duplication function of at least one split radio bearer; and
in a case that the SCG is in an activated state, if the split radio bearer is configured with the PDCP duplication function, activating, by the terminal, a PDCP duplication function of an SCG RLC entity corresponding to at least one split radio bearer.

Optionally, the processor 510 is specifically configured to perform at least one of the following:
in a case that the SCG is in a deactivated state, if the split radio bearer is configured with the PDCP duplication function, deactivating, by the terminal, a PDCP duplication function of at least one split radio bearer; and
in a case that the SCG is in a deactivated state, if the split radio bearer is configured with the PDCP duplication function, deactivating, by the terminal, a PDCP duplication function of an SCG RLC entity corresponding to at least one split radio bearer.

Optionally, the processor 510 is specifically configured to perform at least one of the following:
performing, by the terminal, at least one of measurement and measurement reporting in a case that the SCG is in a deactivated state and an SCG activation request sent by the terminal is rejected; and
canceling, by the terminal, relaxed measurement in a case that the SCG is in a deactivated state and an SCG activation request sent by the terminal is rejected.

Optionally, the processor 510 is specifically configured to:
in a case that the SCG is in a deactivated state and the SCG activation request sent by the terminal is rejected, perform, by the terminal, at least one of measurement and measurement reporting only within preset time.

An embodiment of this application further provides a readable storage medium. A program or an instruction is stored in the readable storage medium. When the program or the instruction is executed by a processor, processes of the embodiment of the secondary cell group control method can be implemented, and a same technical effect can be achieved. To avoid repetition, details are not described herein.

The processor is a processor in the terminal in the foregoing embodiment, or a processor in the network side device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement processes of the embodiment of the secondary cell group control method, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that in this specification, the term "include", "comprise", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A secondary cell group control method, comprising:
receiving, by a terminal, a first command;
controlling, by the terminal, a state of a secondary cell group SCG according to the first command; and
performing, by the terminal, a first operation based on the state of the SCG, wherein the first operation comprises at least one of the following:
controlling a state of a serving cell of the SCG;
reconfiguring or switching a radio bearer related to the SCG;
controlling a state of a Packet Data Convergence Protocol PDCP duplication function; and
performing a measurement-related operation.

2. The method according to claim 1, wherein the controlling, by the terminal, a state of a serving cell of the SCG based on the state of the SCG comprises at least one of the following:
in a case that the SCG is in an activated state, controlling, by the terminal, states of some or all serving cells of the SCG to be a first state, wherein the first state comprises one of the following: a state predefined in a protocol, a state determined based on a Radio Resource Control RRC configuration, and a state determined based on a first Media Access Control control element MAC CE; and
in a case that the SCG is in a deactivated state, controlling, by the terminal, states of some or all serving cells of the SCG to be the deactivated state.

3. The method according to claim 2, wherein the first MAC CE is an SCell activation or deactivation MAC CE, and when a reserved bit of the SCell activation or deactivation MAC CE is a first value, the reserved bit is used to indicate that the SCell activation or deactivation MAC CE is applied to the SCG.

4. The method according to claim 2, wherein the first MAC CE comprises a logical channel identity LCID field and an indication field, and the LCID field is used to indicate a type or a function of the first MAC CE; and
when the LCID field indicates that the type or the function of the first MAC CE is to indicate a state of at least one serving cell of the SCG, the indication field is used to indicate a state of at least one serving cell of the SCG, and when the LCID field indicates that the type or the function of the first MAC CE is to indicate a state of a specific serving cell, the indication field is used to indicate a state of a specific serving cell, and the specific serving cell comprises a primary secondary cell PSCell or an Scell.

5. The method according to claim 4, wherein when the LCID field indicates that the type or the function of the first MAC CE is to indicate a state of at least one serving cell of the SCG, the indication field comprises at least one of the following:
an SCG identity field, used to indicate an SCG corresponding to the first MAC CE;
a first field, used to indicate to activate or deactivate the SCG;
a length field, used to indicate a length of the first MAC CE;
a serving cell identity field or a serving cell bitmap field, used to indicate a state of at least one serving cell of the SCG, wherein the state of the serving cell comprises an activated state or a deactivated state; and
a bandwidth part BWP identity field, used to indicate a BWP that needs to be activated.

6. The method according to claim 5, wherein the indication field comprises the first field and the serving cell bitmap field, and in a case that the first field indicates to deactivate the SCG, the terminal performs one of the following:
ignoring the serving cell bitmap field;
expecting a bit corresponding to the serving cell bitmap field to be 0; and
in a case that the bit corresponding to the serving cell bitmap field is not 0, ignoring the bit corresponding to the serving cell bitmap field.

7. The method according to claim 4, wherein the receiving, by a terminal, a first command comprises:
receiving, by the terminal, the first MAC CE, wherein the type or the function of the first MAC CE is to indicate a state of a specific serving cell; and
the controlling, by the terminal, a state of a secondary cell group SCG according to the first command comprises:
activating or deactivating, by the terminal, an SCG to which the specific serving cell belongs.

8. The method according to claim 2, wherein in a case that the SCG is in a deactivated state, a first configuration received by the terminal does not trigger SCell activation of the SCG, and the first configuration is used to indicate to activate an SCell of the SCG or is used when the SCell of the SCG is in an activated state.

9. The method according to claim 2, wherein in a case that the terminal does not receive a second configuration from a network side device, the first state is the state predefined in the protocol, and the second configuration is used to indicate a state of a serving cell of the SCG.

10. The method according to claim 1, wherein before the receiving, by a terminal, a first command, the method further comprises:
sending, by the terminal, an SCG activation request to a network side device; wherein
the SCG activation request carries one of the following: an identity of a serving cell expected to be activated, a quantity of serving cells expected to be activated, an identity set of serving cells expected to be activated, and a type of a serving cell expected to be activated.

11. The method according to claim 1, wherein the reconfiguring or switching, by the terminal based on the state of the SCG, a radio bearer related to the SCG comprises at least one of the following:
switching, by the terminal, a bearer type of at least one radio bearer from a split bearer to an SCG bearer in a case that the SCG is in an activated state; and
switching, by the terminal, a bearer type of at least one radio bearer from an SCG bearer to a split bearer in a case that the SCG is in a deactivated state.

12. The method according to claim 1, wherein the controlling, by the terminal, a state of a PDCP duplication function based on the state of the SCG comprises at least one of the following:
activating, by the terminal, a PDCP duplication function of at least one radio bearer in a case that the SCG is in an activated state; and
deactivating, by the terminal, a PDCP duplication function of at least one radio bearer in a case that the SCG is in a deactivated state.

13. The method according to claim 12, wherein the activating, by the terminal, a PDCP duplication function of at least one radio bearer in a case that the SCG is in an activated state comprises at least one of the following:
in a case that the SCG is in an activated state, if the split radio bearer is configured with the PDCP duplication function, activating, by the terminal, a PDCP duplication function of at least one split radio bearer; and
in a case that the SCG is in an activated state, if the split radio bearer is configured with the PDCP duplication function, activating, by the terminal, a PDCP duplication function of an SCG RLC entity corresponding to at least one split radio bearer.

14. The method according to claim 12, wherein the deactivating, by the terminal, a PDCP duplication function of at least one radio bearer in a case that the SCG is in a deactivated state comprises at least one of the following:
in a case that the SCG is in a deactivated state, if the split radio bearer is configured with the PDCP duplication function, deactivating, by the terminal, a PDCP duplication function of at least one split radio bearer; and
in a case that the SCG is in a deactivated state, if the split radio bearer is configured with the PDCP duplication function, deactivating, by the terminal, a PDCP duplication function of an SCG RLC entity corresponding to at least one split radio bearer.

15. The method according to claim 1, wherein the performing, by the terminal, a measurement-related operation based on the state of the SCG comprises at least one of the following:
performing, by the terminal, at least one of measurement and measurement reporting in a case that the SCG is in a deactivated state and an SCG activation request sent by the terminal is rejected; and
canceling, by the terminal, relaxed measurement in a case that the SCG is in a deactivated state and an SCG activation request sent by the terminal is rejected.

16. The method according to claim 15, wherein the performing, by the terminal, at least one of measurement and measurement reporting in a case that the SCG is in a deactivated state and an SCG activation request sent by the terminal is rejected comprises:
in a case that the SCG is in a deactivated state and the SCG activation request sent by the terminal is rejected, performing, by the terminal, at least one of measurement and measurement reporting only within preset time.

17. A secondary cell group control apparatus, comprising:
a receiving module, configured to receive a first command;
a control module, configured to control a state of a secondary cell group SCG according to the first command; and
an execution module, configured to perform a first operation based on the state of the SCG, wherein the first operation comprises at least one of the following:
controlling a state of a serving cell of the SCG;
reconfiguring or switching a radio bearer related to the SCG;
controlling a state of a Packet Data Convergence Protocol PDCP duplication function; and performing a measurement-related operation.

18. The apparatus according to claim 17, wherein the execution module is specifically configured to perform at least one of the following:
in a case that the SCG is in an activated state, controlling states of some or all serving cells of the SCG to be a first state, wherein the first state comprises one of the following: a state predefined in a protocol, a state determined based on a Radio Resource Control RRC configuration, and a state determined based on a first Media Access Control control element MAC CE; and
in a case that the SCG is in a deactivated state, controlling states of some or all serving cells of the SCG to be the deactivated state.

19. The apparatus according to claim 18, wherein the first MAC CE is an SCell activation or deactivation MAC CE, and when a reserved bit of the SCell activation or deactivation MAC CE is a first value, the reserved bit is used to indicate that the SCell activation or deactivation MAC CE is applied to the SCG.

20. The apparatus according to claim 18, wherein the first MAC CE comprises a logical channel identity LCID field and an indication field, and the LCID field is used to indicate a type or a function of the first MAC CE; and
when the LCID field indicates that the type or the function of the first MAC CE is to indicate a state of at least one serving cell of the SCG, the indication field is used to indicate a state of at least one serving cell of the SCG, and when the LCID field indicates that the first MAC CE is a second MAC CE, the indication field is used to indicate a state of a specific serving cell, and the specific serving cell comprises a primary secondary cell PSCell or an Scell.

21. The apparatus according to claim 20, wherein when the LCID field indicates that the type or the function of the first MAC CE is to indicate a state of at least one serving cell of the SCG, the indication field comprises at least one of the following:
an SCG identity field, used to indicate an SCG corresponding to the first MAC CE;
a first field, used to indicate to activate or deactivate the SCG;
a length field, used to indicate a length of the first MAC CE;
a serving cell identity field or a serving cell bitmap field, used to indicate a state of at least one serving cell of the SCG, wherein the state of the serving cell comprises an activated state or a deactivated state; and
a bandwidth part BWP identity field, used to indicate a BWP that needs to be activated.

22. The apparatus according to claim 21, wherein the indication field comprises the first field and the serving cell bitmap field, and in a case that the first field indicates to deactivate the SCG, the apparatus performs one of the following:
ignoring the serving cell bitmap field;
expecting a bit corresponding to the serving cell bitmap field to be 0; and
in a case that the bit corresponding to the serving cell bitmap field is not 0, ignoring the bit corresponding to the serving cell bitmap field.

23. The apparatus according to claim 20, wherein the receiving module is specifically configured to:
receive the first MAC CE, wherein the type or the function of the first MAC CE is to indicate a state of a specific serving cell; and
the control module is specifically configured to:
activate or deactivate an SCG to which the specific serving cell belongs.

24. The apparatus according to claim 18, wherein in a case that the SCG is in a deactivated state, a first configuration received by the apparatus does not trigger SCell activation of the SCG, and the first configuration is used to indicate to activate the SCell of the SCG or is used when the SCell of the SCG is in an activated state.

25. The apparatus according to claim 18, wherein in a case that a second configuration is not received from a network side device, the first state is the state predefined in the protocol, and the second configuration is used to indicate a state of a serving cell of the SCG.

26. The apparatus according to claim 18, wherein the apparatus further comprises:
a sending module, configured to: before the first command is received, send an SCG activation request to a network side device; wherein
the SCG activation request carries one of the following: an identity of a serving cell expected to be activated, a quantity of serving cells expected to be activated, an identity set of serving cells expected to be activated, and a type of a serving cell expected to be activated.

27. The apparatus according to claim 17, wherein the execution module is specifically configured to perform at least one of the following:
switching a bearer type of at least one radio bearer from a split bearer to an SCG bearer in a case that the SCG is in an activated state; and
switching a bearer type of at least one radio bearer from an SCG bearer to a split bearer in a case that the SCG is in a deactivated state.

28. The apparatus according to claim 27, wherein the execution module is specifically configured to perform at least one of the following:
activating a PDCP duplication function of at least one radio bearer in a case that the SCG is in an activated state; and
deactivating a PDCP duplication function of at least one radio bearer in a case that the SCG is in a deactivated state.

29. The apparatus according to claim 28, wherein the execution module is specifically configured to perform at least one of the following:
in a case that the SCG is in an activated state, if the split radio bearer is configured with the PDCP duplication function, activating a PDCP duplication function of at least one split radio bearer; and
in a case that the SCG is in an activated state, if the split radio bearer is configured with the PDCP duplication function, activating a PDCP duplication function of an SCG RLC entity corresponding to at least one split radio bearer.

30. The apparatus according to claim 28, wherein the execution module is specifically configured to perform at least one of the following:
in a case that the SCG is in a deactivated state, if the split radio bearer is configured with the PDCP duplication function, deactivating a PDCP duplication function of at least one split radio bearer; and
in a case that the SCG is in a deactivated state, if the split radio bearer is configured with the PDCP duplication function, deactivating a PDCP duplication function of an SCG RLC entity corresponding to at least one split radio bearer.

31. The apparatus according to claim 17, wherein the execution module is specifically configured to perform at least one of the following:
performing at least one of measurement and measurement reporting in a case that the SCG is in a deactivated state and a sent SCG activation request is rejected; and
canceling relaxed measurement in a case that the SCG is in a deactivated state and a sent SCG activation request is rejected.

32. The apparatus according to claim 31, wherein the execution module is specifically configured to:
in a case that the SCG is in a deactivated state and the sent SCG activation request is rejected, perform at least one of measurement and measurement reporting only within preset time.

33. A terminal, comprising a processor, a memory, and a program or an instruction that is stored in the memory and that can run on the processor, wherein when the program or the instruction is executed by the processor, steps of the secondary cell group control method according to any one of claims 1 to 16 are implemented.

34. A readable storage medium, wherein the readable storage medium stores a program or an instruction, and when the program or the instruction is executed by a processor, the secondary cell group control method according to any one of claims 1 to 16 is implemented.
